# EUROPEAN PATENT SPECIFICATION

(11) **EP 3 409 574 B1**
(45) Date of publication and mention of the grant of the patent: **18.03.2020**
(21) Application number: 17174379.2
(22) Date of filing: 02.06.2017
(51) Int. Cl.: B63H 9/02

(54) **A RAISING AND LOWERING MECHANISM FOR A FLETTNER ROTOR**
HEBE- UND SENKMECHANISMUS FÜR EINEN FLETTNER-ROTOR
MÉCANISME DE LEVAGE ET D'ABAISSEMENT POUR UN ROTOR DE FLETTNER

(43) Date of publication of application: 05.12.2018
(73) Proprietor: Anemoi Marine Technologies Limited, London E1W 3SS (GB)
(72) Inventor: STRINGFELLOW, Duncan, London, E1W 3SS (GB)
(74) Representative: Gill Jennings & Every LLP

(56) References cited:
- WO-A1-2013/110695
- US-A1- 2013 032 070
- US-A1- 2015 274 272

## Description

### Field of the Invention

The present invention relates generally, but not exclusively, to Flettner rotors and, in particular, to raising and lowering mechanisms for Flettner rotors.

### Background of the Invention

Flettner rotors, also known as Magnus rotors, can be used on waterborne vessels for propulsion. Such rotors make use of the Magnus effect for vessel propulsion.

Flettner rotors are generally placed upright, in use, on the deck of waterborne vessels. Typically, Flettner rotors comprise an outer rotor in the form of a cylindrical tube disposed about a stator, the rotor being coupled to the stator via a rotatable coupling, normally comprising an upper bearing towards the top end of the stator and a lower bearing further down the stator, often at about a mid-point thereof. The stator is typically connected to a base, which is in turn connected to the vessel deck. The rotor may be longer than and project above the stator, such that the upper bearing may be at about the mid-point of the rotor height.

In the case of a Flettner rotor fitted to a waterborne vessel, the rotor is caused to rotate about its vertical axis and, as the surrounding airflow moves over the spinning rotor, the relative motion between the spinning body of the rotor and the air gives rise to pressure differences in the air. The side of the rotor which is rotating into the airflow retards the airflow locally as a result of the drag caused by the surface of the rotor, whereas the side of the rotor which is rotating away from the airflow speeds up the airflow locally. A high pressure region then develops on the side of the rotor which is rotating into the airflow and a low pressure region develops on the side of the rotor which is rotating away from the airflow. As such, a force in the direction of the low pressure region of the rotor is generated and the force is transferred to the vessel. This force may assist in the propulsion of the vessel. Multiple Flettner rotors can be used in conjunction on a single vessel.

A modern day application of the Flettner rotor is on large vessels such as cargo ships. Flettner rotors are used during transit in conjunction with a vessel's primary propulsion system so as to reduce the burden on the primary propulsion system. This can lead to significant fuel savings, in particular, for long distance journeys under suitable wind conditions. Flettner rotors can present a more efficient means of ship propulsion as compared to the primary propulsion system and therefore the environmental impact of vessels fitted with Flettner rotors can be significantly reduced as compared to vessels which are not so equipped.

When a Flettner rotor is not being used, it can lead to an overall increase in the drag experienced by a vessel to which it is mounted during transit. In rough or stormy conditions, significant forces can be experienced by a Flettner rotor both from direct wind force and as a result of increased movement of the vessel, which can lead to damage of the rotor and the vessel.

Furthermore, the dimensions of the Flettner rotor are such that they can add significantly to the height of a vessel which can cause issues when, for example, entering harbours and when loading and/or unloading cargo from a vessel. Issues can arise when a vessel which has been fitted with one or more Flettner rotors while the vessel is at port due to the size of the rotors and their location on the deck of the vessel. The Flettner rotors can obstruct access of cranes and loading, discharging and other machinery to the deck of the vessel. This can cause delays, or in some cases prevent, loading and unloading of the vessel and can also be hazardous.

As such, there is a need to provide a means by which Flettner rotors may be used on the deck of a vessel to provide the aforementioned fuel saving benefits without the drawback that access to the vessel is obstructed.

As such, it is preferable to be able to store or stow the Flettner rotor when it is not being used to increase clearance for cargo handling equipment.

International patent application number WO 2013/110695 A1 describes a device for displacing a Flettner rotor from a vertically mounted operational state towards a deck of a vessel in an inoperational state. The rotor is hingeably connected to the deck and a hydraulic extension deck 38 can be used to collapse the rotor by pivoting it around the hinge and a rope and pulley system can be used to erect the rotor again.

Although such a raising and lowering system may be suitable for use with smaller Flettner rotors, wherein forces generated by the rotor and by movement of the vessel upon which the rotor is mounted are limited in size, the hingeable connection between the rotor and the base is a weak point of the raising and lowering mechanism, at which the forces generated by the rotor and movement of the vessel are concentrated.

The same can be said of the hydraulic extension mechanism which, when the Flettner rotor is in its erected position, can be subjected to large forces due to the increased length and mass of the Flettner rotor.

British patent application number GB 2187154 A describes a Flettner rotor which can be retracted telescopically into a well in the deck of the ship to which it is mounted. Such designs lead to a reduction in volume below deck which results in the cargo capacity of ships using such a system being reduced. Further, the complex operating mechanism requires significant structural alteration of a ship to which it is to be installed. As such, it is difficult and expensive to retrofit ships with such a system. Moreover, in installing such a system, the weather deck of a ship needs to be penetrated which can cause an increased risk of flooding.

US 2013/032070 A1 discloses a vessel which includes a hull, a propeller for propulsion of the vessel and at least one rotatable cylinder which in its operational state is vertically mounted on the vessel, the cylinder having a rigid outer surface, a motor drive for rotating the cylinder around a longitudinal axis and a displacement member for displacing the cylinder to an inoperational position, wherein the motor drive is situated inside the cylinder.

US 2015/0274272 A1 discloses a vessel comprising a hull and a deck, a substantially cylindrical rotor having a peripheral wall rotatable with respect to the deck around a longitudinal center line, the rotor being mounted on the deck in such a manner that in an operational state the rotor is substantially vertically oriented, characterized in that a flap is arranged near the rotor extending substantially in a plane which is parallel to the rotational axis of the rotor, and the length of the flap chord iis between 20%-90% of the rotor diameter, wherein the position of the flap can be adjusted with reference to the longitudinal center line.

As such, there is a need for an improved raising and lower mechanism for a Flettner rotor which overcomes the above outlined weaknesses in existing raising and lowering mechanism designs.

### Summary of Invention

According to a first aspect of the invention, there is provided a method of lowering an elongate member from a raised position to a lowered position, the elongate member comprising a stator of a Flettner rotor, the method comprising the steps of: transferring the elongate member from: a first mode, in which loads are borne along a first load path between the elongate member and a base, to: a second mode, in which loads are borne along a second load path between the elongate member and the base, which second load path includes a pivot axis, by: separating the elongate member from the base and subsequently engaging a pivot mechanism therebetween; and with the elongate member in the second mode, lowering the elongate member about the pivot axis.

By such a method, the Flettner rotor stator is held in a secure position in the first mode, which is suitable for when the Flettner rotor is operating as there is no pivot axis in the load path which would act as a point of weakness. In order to lower the Flettner rotor stator, it is transferred to a second mode where the associated second load path includes a pivot axis.

Preferably, separating the elongate member from the base comprises lifting the elongate member relative to the base.

Preferably, the lifting is done with a lifting mechanism, forming a temporary load path between the elongate member and the base therethrough.

Preferably, the method further comprises at least partially retracting the lifting mechanism, removing the temporary load path and dropping the elongate member back relative to the base to complete engagement of the pivot mechanism and formation of the second load path.

Preferably, engaging the pivot mechanism comprises inserting a component to complete the second load path.

According to a second aspect of the invention, there is provided a method of raising an elongate member from a lowered position to a raised position, the elongate member comprising a stator of a Flettner rotor, the method comprising the steps of: with the elongate member in a second mode, in which loads are borne along a second load path between the elongate member and a base, which second load path includes a pivot axis, raising the elongate member about the pivot axis; and when raised, transferring the elongate member from the second mode to a first mode, in which loads are borne along a first load path between the elongate member and the base, by disengaging a pivot mechanism therebetween containing said pivot axis and subsequently bringing the elongate member and the base together.

Preferably, disengaging the pivot mechanism comprises removing a component to break the second load path.

Preferably, bringing the elongate member and the base together comprises dropping the elongate member relative to the base.

Preferably, the dropping is done via a lifting mechanism first lifting the elongate member relative to the base to create a temporary load path between the elongate member and the base therethrough and then being dropped.

Preferably, disengaging the pivot mechanism comprises lifting the elongate member relative to the base with the lifting mechanism.

Preferably, the transfer of the elongate member from the first mode to the second mode, and vice versa, is effected by a trunnion mechanism.

Preferably, the elongate member further comprises a rotor of a Flettner rotor.

According to a third aspect of the invention, there is provided an elongate member raising and lowering mechanism, the mechanism comprising: an elongate member, the elongate member comprising a stator of a Flettner rotor; a base; and a load transfer mechanism for transferring the elongate member between a first mode, in which loads are borne along a first load path between the elongate member and the base, and a second mode, in which loads are borne along a second load path between the elongate member and the base, which second load path includes a pivot axis. The mechanism is configured such that transferring the member from the first mode to the second mode comprises separating the elongate member from the base and subsequently engaging a pivot mechanism therebetween.

Advantageously, the mechanism holds Flettner rotor stator in a secure position in the first mode, which is suitable for when the Flettner rotor is operating as there is no pivot axis in the load path which would act as a point of weakness. In order to lower and raise the Flettner rotor stator, it is transferred to a second mode where the associated second load path includes a pivot axis.

Preferably, the load transfer mechanism comprises a trunnion mechanism comprising: a trunnion axle attached to the elongate member; and a trunnion support strut rotatably coupled to the trunnion axle and slidably engaged with the base.

Preferably, the trunnion support strut comprises a first trunnion support strut and a second trunnion support strut, each rotatably coupled to the trunnion axle and slidably engaged with the base.

Preferably, the trunnion axle comprises a first trunnion axle and a second trunnion axle, wherein the first trunnion support strut is rotatably coupled to the a first trunnion axle and, wherein the second trunnion support strut is rotatably coupled to the a second trunnion axle.

Preferably, the trunnion mechanism further comprises: a trunnion strut bearing block; and a mechanism for inserting the trunnion strut bearing block between the trunnion strut and the base to complete the second load path therethrough.

Preferably, the mechanism for inserting the trunnion strut bearing block between the trunnion strut and the base comprises a double-acting hydraulic cylinder. Preferably, the raising and lowering mechanism further comprises one or more bearing points disposed between the elongate member and the base and along the first load path.

Preferably, the raising and lowering mechanism further comprises a lifting mechanism configured to separate the elongate member from the base so as to allow transfer of the elongate member between the first mode and the second mode.

Preferably, the lifting mechanism comprises one or more jacks.

Preferably, the raising and lowering mechanism further comprises an actuating mechanism coupled between the elongate member and the base and configured to raise and/or lower the elongate member when in the second mode, preferably wherein the actuating mechanism is one or both of an actuating ram and a winching mechanism.

Preferably, the actuating mechanism is coupled to the elongate member via one or more cranked ties.

Preferably, the actuating mechanism comprises an actuating ram which is in a retracted state when the elongate member is in a lowered position.

Preferably, the raising and lowering mechanism further comprises a hold-down mechanism configured to secure the elongate member to the base.

Preferably, the hold-down mechanism comprises one or more lashings, for example turnbuckles, coupled between the elongate member and the base.

Preferably, the base is secured to or is integrally formed with a deck.

Preferably, the elongate member further comprises a rotor of a Flettner rotor.

### A Brief Description of the Drawings

Embodiments of the present invention will now be described, by way of example only, with reference to the accompanying drawings, in which:
Figure 1 depicts a Flettner rotor in schematic form;
Figures 2a shows a Flettner rotor in a raised position;
Figure 2b shows a close-up of the pedestal and the base of the Flettner rotor shown in Figure 2a;
Figure 3a shows a trunnion support when the Flettner rotor is in a first mode;
Figure 3b shows the trunnion support when the Flettner rotor is part way through a transition between the first mode and a second mode;
Figure 3c shows the trunnion support when the Flettner rotor is in the second mode;
Figure 4 depicts the Flettner rotor in the second mode;
Figure 5a depicts the slide beams, main hydraulic cylinder, first slide and second slide shown in Figure 4;
Figure 5b depicts an alternative arrangement of that depicted in Figure 5a where a winching mechanism is attached to the second slide 408 in place of the hydraulic cylinder;
Figures 6a to 6d, which show the Flettner rotor at various points during the raising and lowering process; and
Figures 7a and 7b, are flow diagrams showing the steps involved in the raising and lowering process.

### Detailed Description

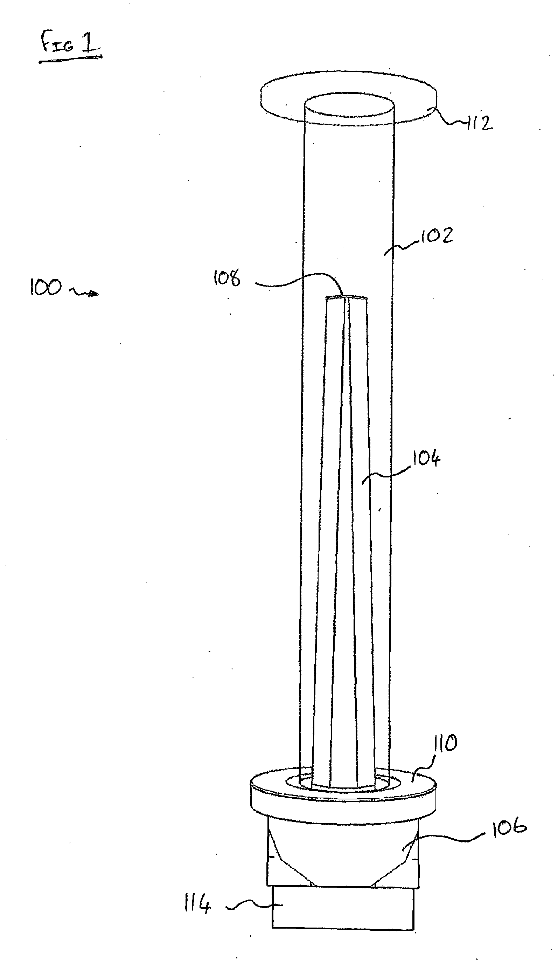

Figure 1 depicts, in schematic form, a Flettner rotor 100 comprising a rotor 102 (shown transparent so that the elements located within are visible), a stator 104, a pedestal 106, an upper bearing 108 and a lower bearing 110. As in known in the art, the rotor may be capped by a top disc 112 for improved aerodynamic properties. The top disc 112 may typically have a diameter of twice that of the rotor 102. The rotor 102 may further include additional discs, or other features for aerodynamic enhancement.

The rotor 102 is disposed about the stator 104 and is rotatably coupled to the stator 104 via the upper bearing 108 and the lower bearing 110. A base end of the stator 104 sits on and is fixed to the pedestal 106 and a lower end of the rotor 102 sits within the pedestal 106. The pedestal 106 sits on top of a base 114. The lower bearing 110 constricts radial movement of the rotor at its base end.

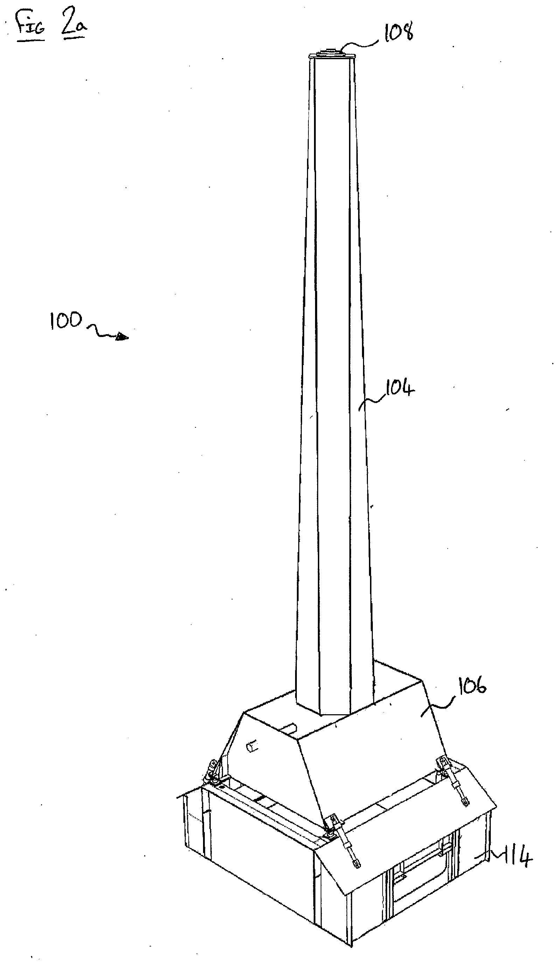

Figures 2a shows the Flettner rotor 100 in a raised position, with the rotor 102 removed to reveal the stator 104 and the upper bearing 108.

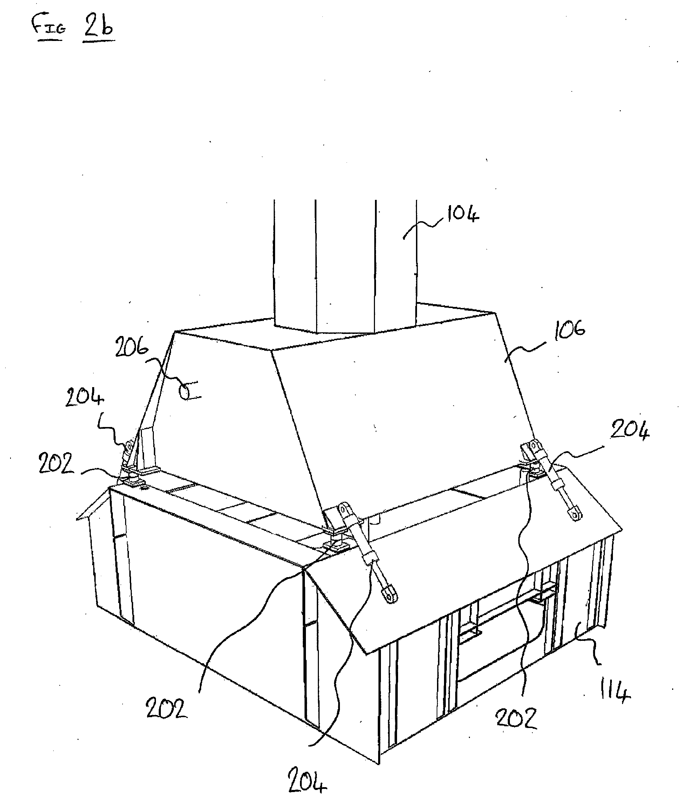

Figure 2b shows a close-up of the pedestal 106 and the base 114 of the Flettner rotor 100 shown in Figure 2a. Bearing points in the form of corner bearings 202 are disposed between the pedestal 106 and the base 114 at each corner of the pedestal 106. The weight of the rotor 102, stator 104 and pedestal 106 is transferred to the base 114 through the corner bearings 202, together with any forces (such as due to wind and/or the Magnus effect) acting on the rotor 100.

In this raised position, and in a first mode, the loads (of the stator 104 and pedestal 106) are borne along a first load path between the pedestal 106 and the base 114 via the corner bearings 202.

The Flettner rotor 100 comprises a hold down mechanism (in this illustrated embodiment comprising turnbuckles 204, although lashings or other suitable securing mechanism may be used) disposed between the pedestal 106 and the base 114, at each corner of the pedestal 106, which acts to secure the pedestal 106 and stator 104 to the base 114 when the Flettner rotor 100 is in the raised position and in the first mode. As such, when the Flettner rotor 100 is in the raised position and in the first mode, it is securely mounted to the base 114.

Figure 2b also shows a trunnion axle 206 disposed on the pedestal 106. A second trunnion axle 206 is disposed on the opposite side of the pedestal 106 (not visible in Figure 2b). The trunnion axles 206 may be fixedly connected to the pedestal 106 or integrally formed with the pedestal 106. The trunnion axles 206 define an axis about which the pedestal 106 and stator 104 pivot when the Flettner rotor 100 is in a second mode, as described more fully below. In an alternative arrangement, a single trunnion axle may be provided which runs through the pedestal 106 so as to define an axis about which the pedestal 106 and stator 104 pivot.

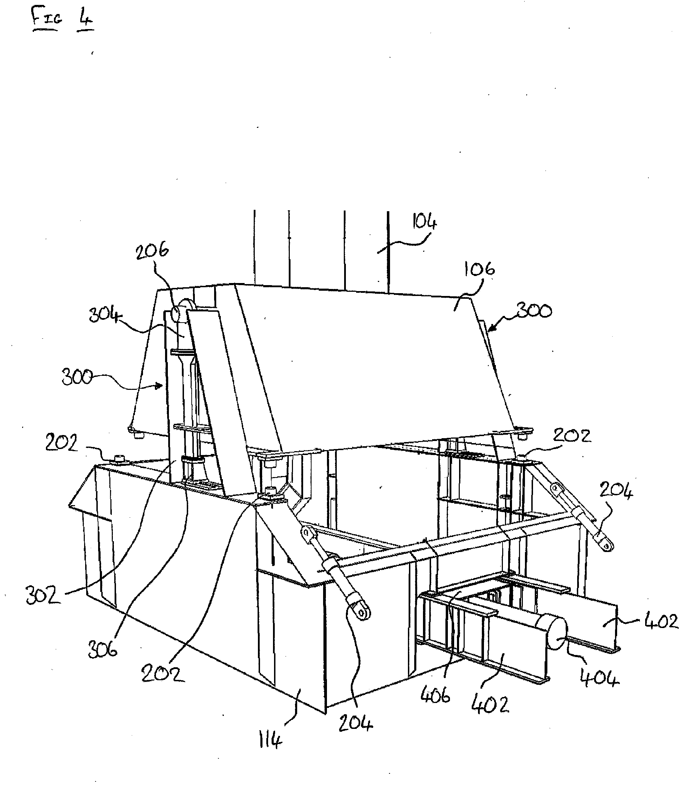

The pivot axis defined by the trunnion axles may be offset horizontally from the centre of gravity of the stator 104 and pedestal 106. This is to ensure that the tendency of the stator 104 and pedestal 106 is to lower due to their own weight. Advantageously this means that the stator 104 and pedestal 106 can be lowered without power, if required, and that the main hydraulic cylinder 404, depicted in Figure 4 and described in further detail below, is always in compression.

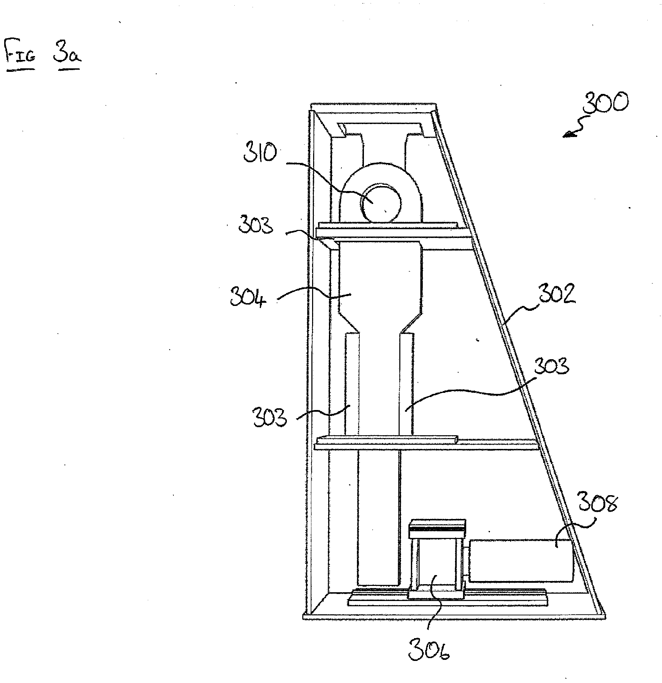

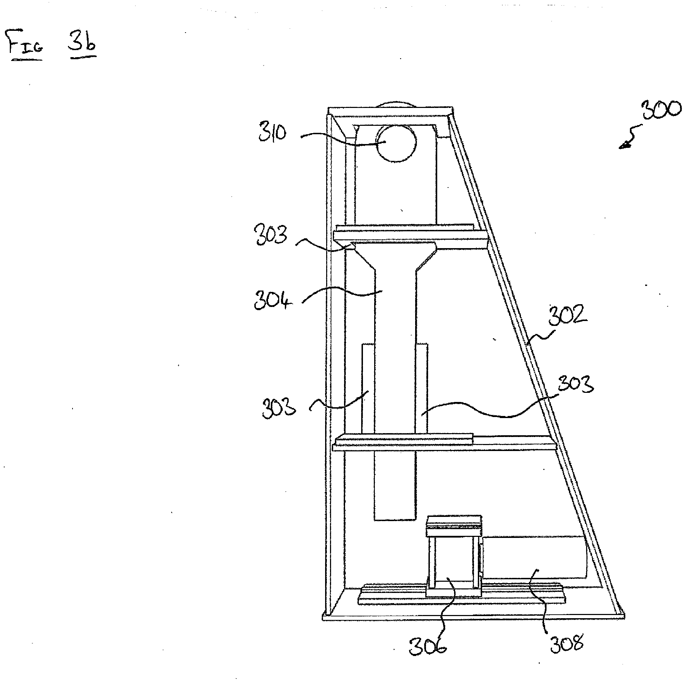

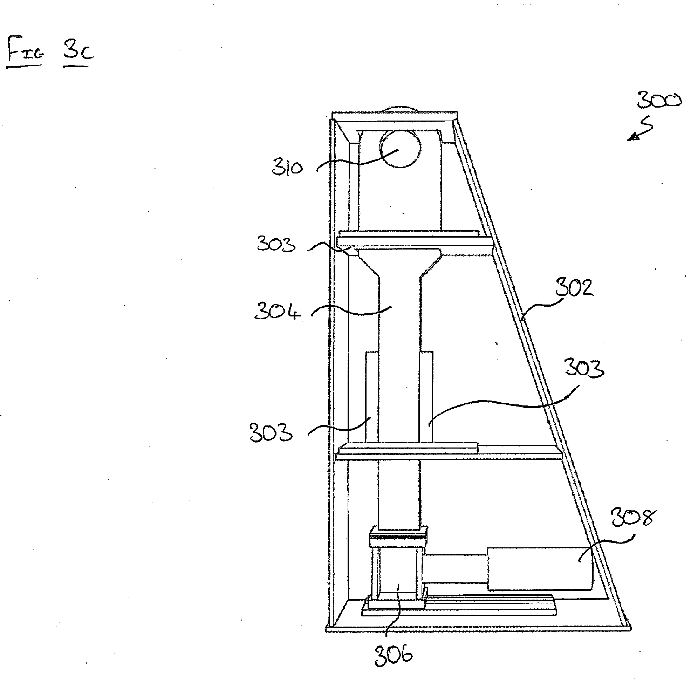

Figures 3a, 3b and 3c show a trunnion support 300 in various stages of a transition between the first mode and the second mode. The Flettner rotor 100 comprises two trunnion supports 300, one coupled to each trunnion axle 206. The trunnion support 300 comprises a trunnion frame 302 which houses a trunnion strut 304 and a bearing block 306. The bearing block 306 is coupled to a double-acting hydraulic cylinder 308 configured to move the bearing block 306 between an extended position, where it is disposed beneath the trunnion strut 304 (shown in Figure 3c), and a retracted position, where it is disposed adjacent the trunnion strut 304 (shown in Figures 3a and 3b).

The bottom end of the trunnion frame 302 is securely fixed to the base 114, for example by bolted connections, welding or a combination thereof. The trunnion strut 304 is movable vertically within the trunnion frame 302 and the horizontal movement of the trunnion strut 304 is constrained by guides 303. The trunnion strut 304 comprises an aperture 310 which is configured to be rotatably coupled to the associated trunnion axle 206.

Figure 3a shows the trunnion support 300 when the Flettner rotor 100 is in the first mode. The bearing block 306 is in its retracted position to the side of the trunnion strut 304 and the double-acting hydraulic cylinder 308 is in its retracted position. The load of the rotor 102, stator 104 and pedestal 106 is borne by the corner bearings 202.

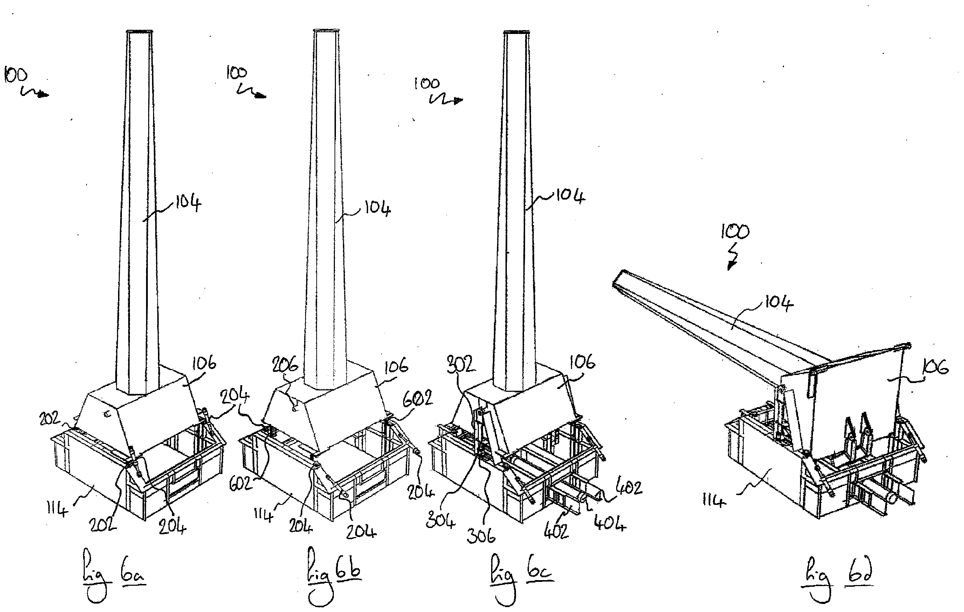

Raising the pedestal 106 relative to the base 114 raises the trunnion strut 304 within the trunnion frame 302 as the trunnion strut 304 is coupled to one of the trunnion axles 206 which is, in turn, coupled to the pedestal 106. The pedestal 106 can be raised and lowered by four corner jacks 602 housed within the base 114 (shown in Figure 6b) forming a temporary load path between the rotor 102, stator 104 and pedestal 106 and the base 114.

When transitioning between the first mode and the second mode, the pedestal 106 and the trunnion strut 304 are raised by the corner jacks 602 to a point where the lower face of the trunnion strut 304 is raised above the upper face of the bearing block 306, such that the bearing block 306 can be slid underneath or removed from underneath the trunnion strut 304, depending on whether the transition is from or into the first mode.

Figure 3b shows the trunnion support 300 when the Flettner rotor 100 is part way through a transition between the first mode and the second mode at the above described stage wherein and the pedestal 106 and trunnion strut 304 are fully raised. The bearing block 306 is in its retracted position to the side of the trunnion strut 304 and the trunnion strut 304 has been raised within the trunnion frame 302 such that the lower face of the trunnion strut 304 is above the bearing block 306.

To transition into the second mode, the bearing block 306 is slid underneath the trunnion strut 304, the pedestal 106 is lowered by the four corner jacks 602 and the trunnion strut 304 is lowered onto the bearing block 306, such that the weight of the rotor 102, stator 104 and pedestal 106 is borne along a second load path between the trunnion axles 206, trunnion struts 304, bearing blocks 306 and the base 114. At this point the Flettner rotor 100 is in the second mode (as shown in Figure 3c).

Figure 3c shows the trunnion support 300 when the Flettner rotor 100 is in the second mode. The bearing block 306 is in its extended position underneath the trunnion strut 304 and the double-acting hydraulic cylinder 308 is in its extended position.

Figure 4 depicts the Flettner rotor 100 in the second mode, wherein the load of the rotor 102, stator 104 and pedestal 106 is borne along the second load path. Only the first trunnion support 300 is fully visible in Figure 4.

In this configuration, the pedestal 106, and also the stator 104 and rotor 102 attached to it, is rotatable about the pivot axis defined by the rotatable couplings between the trunnion axles 206 and the associated trunnion struts 304.

Two slide beams 402 are disposed within the base 114. The slide beams house an actuating ram, depicted as a main hydraulic cylinder 404, which can be actuated to raise and lower the Flettner rotor 100. The slide beams 402 form a load carrying part of the raising and lowering mechanism when the Flettner rotor 100 is in the second mode.

The main hydraulic cylinder 404 may be substituted with any suitable actuating ram or actuating means, such as a winching mechanism attached to the second slide 408. This is made possible due to the aforementioned fact that the trunnion axles 206 may be offset horizontally from the centre of gravity of the stator 104, ensuring that the tendency of the stator 104 and pedestal 106 is always to lower due to their own weight, and consequently the winch line is always in tension.

The main hydraulic cylinder 404 is connected to the slide beams 402 via a first slide 406 and a second slide 408, which are slideably engaged with the slide beams 402.

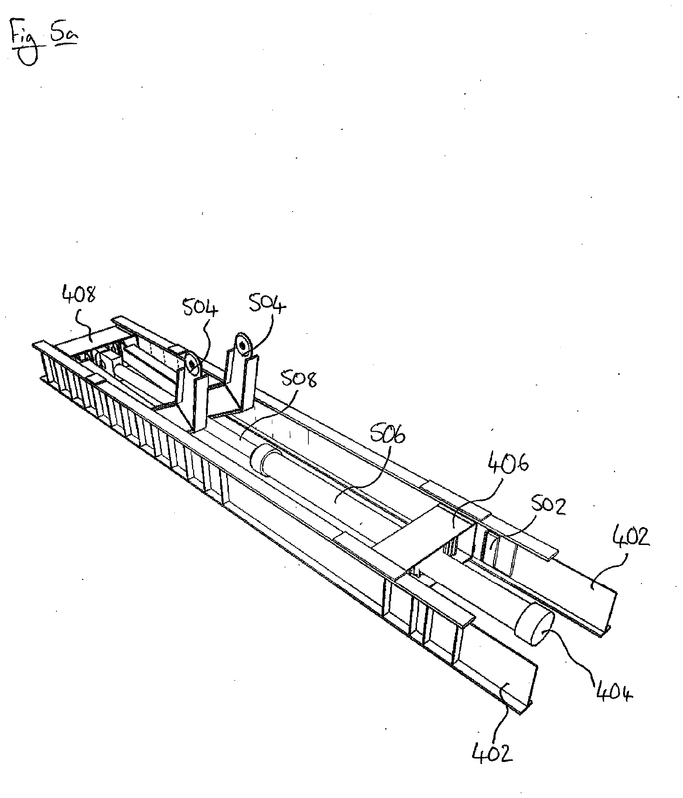

Figure 5a depicts the slide beams 402, main hydraulic cylinder 404, first slide 406 and second slide 408 shown in Figure 4. The first and second slides 406 and 408 are vertically constrained by the slide beams 402, by means of flanges and/or webs formed in the slide beams 402, preventing the slides 406 and 408 from lifting relative to the slide beams 402.

The first slide 406 comprises an opening to accommodate a cylinder barrel 506 of the main hydraulic cylinder 404. The first slide 406 is rotatably coupled to the cylinder barrel 506 via a main cylinder intermediate trunnion arrangement (not shown) disposed within the first slide 406. Other connections between the first slide 406 and the cylinder barrel 506 are possible.

The slide beams 402 each comprise end stops 502 configured to engage the first slide 406 and prevent the horizontal movement of the first slide 406 in a direction away from the second slide 408. The first slide 406 can be moved away from the end stops 502 in a direction towards the second slide 408, for example when the main hydraulic cylinder 404 is being 'parked'. i.e. is fully retracted when the Flettner rotor 100 is raised and is in the first mode.

The second slide 408 is coupled to the end of a piston rod 508 of the main hydraulic cylinder 404 which is opposite to the end of the main hydraulic cylinder 404 to which first slide 406 is coupled. Two cranked ties 504 are coupled to the second slide 408 such that the cranked ties 504 are coupled to the end of the main hydraulic cylinder 404 via the second slide 408.

The cranked ties 504 are rotatably coupled to the second slide 408 at one end and rotatably coupled to the underside of the pedestal 106 at the other end. For example, the cranked ties 504 may be rotatably coupled to the second slide 408 and pedestal 106 by being pinned to pin plates disposed on the second slide 408 and pedestal respectively (not shown).

Actuation of the main hydraulic cylinder 404 is transmitted to the pedestal 106 via the cranked ties 504.

The main hydraulic cylinder 404 provides a moment about the axis of the trunnion axles 206 via the cranked ties 504. The main hydraulic cylinder 404 and the cranked ties 504 are geometrically arranged such that the path of movement followed by the ends of the cranked ties 504 coupled to the underside of the pedestal 106 is such that their lever arm to the trunnion support 300 is at a minimum when the Flettner rotor 100 is raised (minimum moment to resist) and at a maximum when the Flettner rotor 100 is lowered (maximum moment to resist). In other words, the ends of the cranked ties 504 coupled to the second slide 408 follow a straight path during raising and lowering of the Flettner rotor 100 whereas the ends of the cranked ties 504 coupled to the underside of the pedestal 106 follow a curved path. This limits the load on the main hydraulic cylinder 404 by keeping it constant throughout the range of movement of the Flettner rotor 100.

The shape of the cranked ties 504 is complex, and is constrained by numerous requirements. The cranked ties 504 must not clash with the pedestal 106 through their full range of movement; also clearances must be maintained between the cranked ties 504 and the surface upon which the base 114, within which the cranked ties 504 are disposed, is seated. The cranked ties 504 are shaped to meet these requirements.

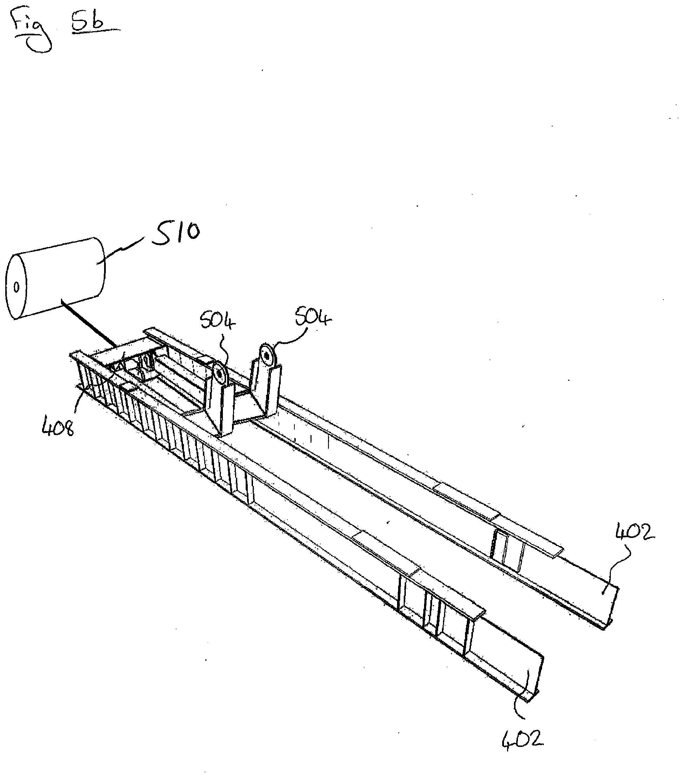

Figure 5b depicts an alternative arrangement where a winching mechanism 510 is attached to the second slide 408 in place of the hydraulic cylinder 404. The arrangement operates substantially in the same way as that depicted in Figure 5b, the difference being that the actuation of the cranked ties 504 via the second slide 408 is by the winching mechanism 510.

The winching mechanism 510 may equally be used in conjunction with the hydraulic cylinder 404 in the arrangement depicted in Figure 5a as an additional actuating means so as to provide an arrangement with two actuating means. Advantageously, one actuating means may act as a failsafe to the other.

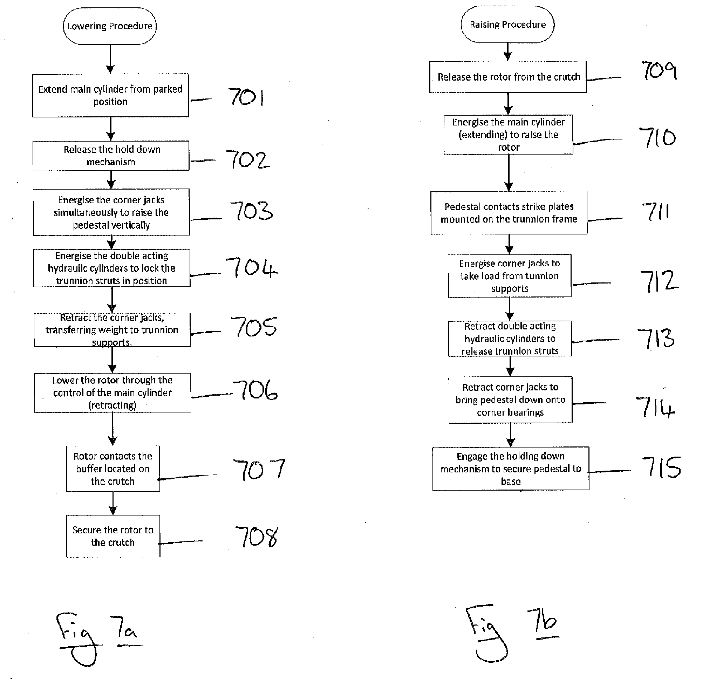

The steps involved in the raising and lowering of the Flettner rotor 100 shall now be described in detail, with reference to Figures 6a to 6d, which show the Flettner rotor 100 at various points during the raising and lowering process, and Figures 7a and 7b, which are flow diagrams showing the steps involved in the raising and lowering process.

Figure 6a shows the Flettner rotor 100 in the first mode, wherein the load of the stator 104 and pedestal 106 is transmitted to the base 114 via four corner bearings 202. The pedestal 106 is further secured to the base 114 via a hold down mechanism 204. Not shown in Figure 6a are the rotor 102, the trunnion support 300 and the main hydraulic cylinder 404.

Figure 6b shows the Flettner rotor 100, wherein the hold down mechanism 204 has been released and the pedestal 106 and stator 104 have been raised relative to the base 114 by corner jacks 602 to form a temporary load path between the rotor 102, stator 104 and pedestal 106 and the base 114. The corner jacks are able to lift the entire pedestal 106, including the stator 104 and the rotor 102, away from the base 114. This allows the weight of the pedestal 106, stator 104 and rotor 102 to be transferred from the corner bearings 204 onto the trunnion axles 206.

Although corner jacks 602 are shown in Figure 6b, the pedestal 106 may be raised by any suitable means. For example, an actuating ram may be used. The corner jacks 602 also need not be placed at the corners of the pedestal. A single jack or any suitable configuration of jacks may be provided to raise the pedestal 106.

The raising of the pedestal 106 by the corner jacks 602 has the effect of raising the trunnion axles 206 relative to the trunnion frame 302. This in turn raises the trunnion struts 304, which are coupled to be trunnion axles 206, within the frame. The corner jacks 602 raise the trunnion struts 304 within the trunnion frame 302 to such an extent that the bearing blocks 306 can be inserted beneath the trunnion struts 304. As such, when the pedestal 106 is lowered by retracting the corner jacks 602, the weight of the pedestal 106 is borne by the trunnion struts 304 and bearing blocks 306, via the trunnion axles 206, and also the cranked ties 504, the slides 406 and 408, the slide beams 402 and the main cylinder 404. This is the second mode of the Flettner rotor 100, which is shown in Figure 6c.

When the Flettner rotor 100 is in the second mode, it is pivotable about the axis of the trunnion axles 206 by virtue of the rotatable coupling between the trunnion axles 206 and the trunnion struts 304. The Flettner rotor 100 can be raised and/or lowered by actuation of the main hydraulic cylinder 404, which is coupled to the pedestal 106 via the cranked ties 504.

When the Flettner rotor 100 is in the raised position and in the second mode (as shown in Figure 6c), the main hydraulic cylinder 404 is in an extended position. Retracting the main hydraulic cylinder 404 moves the second slide 408 towards the first slide 406, the movement of which is blocked by the end stops 502. This also moves the cranked ties 504 towards the first slide 406, which causes the pedestal 106 to pivot about the trunnion axles 206 which lowers the Flettner rotor 100 to the position shown in Figure 6d.

A crutch structure (not shown) which is permanently or temporarily fixed to the deck may be used to support the rotor 102 when in the lowered position, allowing the rotor to be secured and the load to be released from the main hydraulic cylinder 404.

In the lowered position depicted in Figure 6d, the underside of the stator 104 and the rotor 102, when attached to the stator 104, are located at a predetermined distance above the deck of the ship upon which the base 114 is mounted. Advantageously, the stator 104 and the rotor 102 are kept clear of the deck of the ship such that they do not interfere with any operations at deck level. It will be understood that the dimensions of the base 114 and the components of the Flettner rotor 100 can be configured to provide a desired distance to the underside of the stator 104 and the rotor 102 from the deck when the Flettner rotor 100 is in a lowered position.

To raise the Flettner rotor 100 from the position shown in Figure 6d, the main hydraulic cylinder 404 is actuated. As the Flettner rotor 100 is in the second mode, actuating the hydraulic cylinder 404 raises the Flettner rotor 100 to the position shown in Figure 6c.

Once the Flettner rotor 100 is in the fully raised position shown in Figure 6c, the transfer from the second mode to the first mode takes place. The pedestal 106 is raised relative to the base 114 by the corner jacks 302 to the position shown in Figure 6b. Raising the pedestal 106 raises the trunnion struts 304, as described in detail above, which enables the bearing blocks 306 to be retracted from beneath the trunnion struts 304. As such, when the pedestal 106 is lowered by retracting the corner jacks 602, it is lowered onto the corner bearings 202, as shown in Figure 6a.

Once lowered onto the corner bearings 202, the hold down mechanism may be engaged, i.e. the turnbuckles 204 may be used to secure the pedestal 106 and stator 104 to the base 114.

Figure 7a is a flow diagram showing the steps involved in lowering the Flettner rotor 100.

The first step 701 is the optional step of extending the main hydraulic cylinder 404 from its parked position. The main hydraulic cylinder 404 is fully retracted when the Flettner rotor 100 is in its lowered position and can also be fully retracted once the Flettner rotor 100 has been raised and is in the first mode so as to 'park' the main hydraulic cylinder 404. Parking, i.e. fully retracting, the main hydraulic cylinder 404 houses the piston rod 508 within the cylinder barrel 506, reducing the likelihood of damage or corrosion to the main hydraulic cylinder 404. Indeed, all hydraulic cylinders in the system can be retracted in a sea going state. This obviates the need for baffles or other protective mechanisms.

At step 702, the hold-down mechanism 204 is released. Where the hold-down mechanism comprises one or more turnbuckles disposed between the pedestal 106 and the base 114, step 702 comprises releasing these turnbuckles.

At step 703, the corner jacks 602 are energised simultaneously to raise the pedestal 106 relative to the base 114 via a temporary load path through the jacks 602.

At step 704, the double-acting hydraulic cylinders 308 slide the bearing blocks 306 underneath the trunnion struts 304 to lock the trunnion struts into position.

At step 705, the corner jacks 602 are retracted, transferring the weight of the pedestal to the trunnion supports 300 via the trunnion axles 206.

At step 706, the Flettner rotor 100 is lowered through actuation of the main hydraulic cylinder 404. For example, the main hydraulic cylinder 404 may be retracted.

The speed at the end of the lowering operation reduces as a result of the aforementioned geometry of the cranked ties 504. As the Flettner rotor 100 is being lowered by movement of the main hydraulic cylinder 404 at a constant speed, the speed of angular rotation of the Flettner rotor 100 decreases as the length of the lever arm of the cranked ties 504 increases.

At step 707, the Flettner rotor 100 optionally contacts a buffer located on a crutch at the end of the lowering operation where a crutch is present.

At step 708, the Flettner rotor 100 is optionally secured to the crutch where a crutch is present.

Figure 7b outlines the steps involved in raising the Flettner rotor 100 from a lowered position.

At step 09, the rotor 100 is optionally released from a crutch where a crutch is present.

At step 710, the main hydraulic cylinder 404 is actuated so as to raise the Flettner rotor 100. For example, the main hydraulic cylinder 404 may be extended.

At step 711, the pedestal 106 contacts strike plates mounted on the trunnion frame 302 which act as a positioning aid.

At step 712, the corner jacks 602 are energised to lift the pedestal 106 relative to the base 114 so as to take the load of the pedestal 106 from the trunnion support 300.

At step 713, the double-acting hydraulic cylinders 308 retract the bearing blocks 306 from underneath the trunnion struts 304 such that the trunnion struts 304 are free to move vertically downwardly within the trunnion frame 302.

At step 714, the corner jacks 602 are retracted so that the pedestal 106 is lowered onto the corner bearings 202.

At step 715, the hold-down mechanism 204 is engaged so as to secure the pedestal 106 to the base 114.

Although the embodiments described herein are in relation to a base 114 and pedestal 106 upon which components of the Flettner rotor 100 are displaced, it will be understood that exactly the same raising and lowering mechanism as substantially described herein could be used with other structures. The components of the Flettner rotor 100, namely the rotor 102, stator 104, upper bearing 108, lower bearing 110 and top disk 112, could be substituted with a number of other structures.

For example, a wind turbine, flag pole, antennae or other such elongate member could be coupled to the pedestal 106 in place of the above outlined components of the Flettner rotor 100 and could be raised or lowered by the above described mechanism and processes.

## Claims

1. A method of lowering an elongate member from a raised position to a lowered position, the elongate member comprising a stator (104) of a Flettner rotor (100), the method comprising the steps of:
transferring the elongate member from:
a first mode, in which loads are borne along a first load path between the elongate member and a base (114), to:
a second mode, in which loads are borne along a second load path between the elongate member and the base (114), which second load path includes a pivot axis (206), by:
separating the elongate member from the base (114) and subsequently engaging a pivot mechanism (206, 304) therebetween containing said pivot axis (206); and
with the elongate member in the second mode, lowering the elongate member about the pivot axis.

2. The method of claim 1, wherein separating the elongate member from the base (114) comprises lifting the elongate member relative to the base (114), preferably,
wherein the lifting is done with a lifting mechanism, forming a temporary load path between the elongate member and the base (114) therethrough, more preferably,
wherein the method further comprises at least partially retracting the lifting mechanism, removing the temporary load path and dropping the elongate member back relative to the base (114) to complete engagement of the pivot mechanism and formation of the second load path.

3. The method of any preceding claim, wherein engaging the pivot mechanism comprises inserting a component to complete the second load path.

4. A method of raising an elongate member from a lowered position to a raised position, the elongate member comprising a stator (104) of a Flettner rotor (100), the method comprising the steps of:
with the elongate member in a second mode, in which loads are borne along a second load path between the elongate member and a base (114), which second load path includes a pivot axis, raising the elongate member about the pivot axis; and
when raised, transferring the elongate member from the second mode to a first mode, in which loads are borne along a first load path between the elongate member and the base (114), by disengaging a pivot mechanism (206, 304) therebetween containing said pivot axis (206) and subsequently bringing the elongate member and the base together.

5. The method of claim 4, wherein disengaging the pivot mechanism comprises removing a component to break the second load path, preferably,
wherein bringing the elongate member and the base (114) together comprises dropping the elongate member relative to the base, more preferably,
wherein the dropping is done via a lifting mechanism first lifting the elongate member relative to the base to create a temporary load path between the elongate member and the base (114) therethrough and then being dropped, even more preferably, wherein disengaging the pivot mechanism comprises lifting the elongate member relative to the base (114) with the lifting mechanism.

6. The method of any preceding claim, in which the transfer of the elongate member from the first mode to the second mode, and vice versa, is effected by a trunnion mechanism and/or,
wherein the elongate member further comprises a rotor (102) of a Flettner rotor (100).

7. An elongate member raising and lowering mechanism, the mechanism comprising:
an elongate member, the elongate member comprising a stator (104) of a Flettner rotor (100);
a base (114); and
a load transfer mechanism for transferring the elongate member between a first mode, in which loads are borne along a first load path between the elongate member and the base, and a second mode, in which loads are borne along a second load path between the elongate member and the base, which second load path includes a pivot axis (206);
wherein the mechanism is configured such that transferring the elongate member from the first mode to the second mode comprises separating the elongate member from the base and subsequently engaging a pivot mechanism (206, 304) therebetween containing said pivot axis (206)

8. The raising and lowering mechanism of claim 7, wherein the load transfer mechanism comprises a trunnion mechanism comprising:
a trunnion axle (206) attached to the elongate member; and
a trunnion support strut (300) rotatably coupled to the trunnion axle (206) and slidably engaged with the base (114), preferably,
wherein the trunnion support strut (300) comprises a first trunnion support strut and a second trunnion support strut, each rotatably coupled to the trunnion axle (206) and slidably engaged with the base (114), more preferably,
wherein the trunnion axle (206) comprises a first trunnion axle and a second trunnion axle, wherein the first trunnion support strut is rotatably coupled to the a first trunnion axle and, wherein the second trunnion support strut is rotatably coupled to the a second trunnion axle.

9. The raising and lowering mechanism of claim 8, wherein the trunnion mechanism further comprises:
a trunnion strut bearing block (306); and
a mechanism for inserting the trunnion strut bearing block (306) between the trunnion strut (300) and the base (114) to complete the second load path therethrough, preferably,
wherein the mechanism for inserting the trunnion strut bearing block (306) between the trunnion strut (300) and the base (114) comprises a double-acting hydraulic cylinder (308).

10. The raising and lowering mechanism of any of claims 7 to 9, further comprising one or more bearing points (202) disposed between the elongate member and the base (114) and along the first load path and/or
further comprising a lifting mechanism configured to separate the elongate member from the base (114) so as to allow transfer of the elongate member between the first mode and the second mode, preferably, wherein the lifting mechanism comprises one or more jacks (602).

11. The raising and lowering mechanism of any of claims 7 to 10, further comprising an actuating mechanism coupled between the elongate member and the base (114) and configured to raise and/or lower the elongate member when in the second mode, preferably wherein the actuating mechanism is one or both of an actuating ram and a winching mechanism, preferably,
wherein the actuating mechanism is coupled to the elongate member via one or more cranked ties (504), more preferably,
wherein the actuating mechanism comprises an actuating ram which is in a retracted state when the elongate member is in a lowered position.

12. The raising and lowering mechanism of any of claims 7 to 11, further comprising a hold-down mechanism configured to secure the elongate member to the base (114).

13. The raising and lowering mechanism of claim 12, wherein the hold-down mechanism comprises one or more lashings, for example turnbuckles (204), coupled between the elongate member and the base (114).

14. The raising and lowering mechanism of any of claims 7 to 13, wherein the base (114) is secured to or is integrally formed with a deck.

15. The raising and lowering mechanism of any of claims 7 to 14, wherein the elongate member further comprises a rotor (102) of a Flettner rotor (100).

## Patentansprüche

1. Verfahren zum Senken eines länglichen Elements aus einer gehobenen Position in eine gesenkte Position, wobei das längliche Element einen Stator (104) eines Flettner-Rotors (100) umfasst, wobei das Verfahren folgende Schritte umfasst:
Transferieren des länglichen Elements aus:
Einem ersten Modus, in dem Belastungen entlang eines ersten Belastungsweges zwischen dem länglichen Element und einer Basis (114) getragen werde, in:
Einen zweiten Modus, in dem Belastungen entlang eines zweiten Belastungsweges zwischen dem länglichen Element und der Basis (114) getragen werden, welcher zweite Belastungsweg eine Schwenkachse (206) einschließt, durch:
Trennen des länglichen Elements von der Basis (114) und anschließendes in Eingriff bringen eines Schwenkmechanismus (206, 304) dazwischen, der die Schwenkachse (206) enthält; und
mit dem länglichen Element im zweiten Modus, Senken des länglichen Elements um die Schwenkachse.

2. Verfahren nach Anspruch 1, wobei das Trennen des länglichen Elements von der Basis (114) das Heben des länglichen Elements relativ zur Basis (114) umfasst, vorzugsweise,
wobei das Heben mit einem Hebemechanismus geschieht, der einen temporären Belastungsweg zwischen dem länglichen Element und der Basis (114) dort hindurch bildet, noch bevorzugter,
wobei das Verfahren ferner zumindest teilweises Einfahren des Hebemechanismus, Entfernen des temporären Belastungsweges und Senken des länglichen Elements zurück relativ zur Basis (114) umfasst, um das in Eingriff bringen des Schwenkmechanismus und die Bildung des zweiten Belastungsweges abzuschließen.

3. Verfahren nach einem vorhergehenden Anspruch, wobei das in Eingriff bringen des Schwenkmechanismus das Einfügen einer Komponente umfasst, um den zweiten Belastungsweg abzuschließen.

4. Verfahren zum Heben eines länglichen Elements aus einer gesenkten Position in eine gehobene Position, wobei das längliche Element einen Stator (104) eines Flettner-Rotors (100) umfasst, wobei das Verfahren folgende Schritte umfasst:
Mit dem länglichen Element in einem zweiten Modus, in dem Belastungen entlang eines zweiten Belastungsweges zwischen dem länglichen Element und einer Basis (114) getragen werden, welcher zweite Belastungsweg eine Schwenkachse einschließt, und
wenn gehoben, Transferieren des länglichen Elements aus dem zweiten Modus in einen ersten Modus, in welchem Belastungen entlang eines ersten Belastungsweges zwischen dem länglichen Element und der Basis (114) getragen werden, durch Entkoppeln eines Schwenkmechanismus (206, 304) dazwischen, der die Schwenkachse (206) enthält und anschließendes Zusammenbringen des länglichen Elements und der Basis.

5. Verfahren nach Anspruch 4, wobei das Entkoppeln des Schwenkmechanismus das Entfernen einer Komponente umfasst, um den zweiten Belastungsweg zu unterbrechen, vorzugsweise,
wobei das Zusammenbringen des länglichen Elements und der Basis (114) das Senken des länglichen Elements relativ zur Basis umfasst, noch bevorzugter,
wobei das Senken über einen Hebemechanismus geschieht, der zuerst das längliche Element relativ zur Basis hebt, um einen temporären Belastungsweg zwischen dem länglichen Element und der Basis (114) dort hindurch zu schaffen und danach gesenkt wird, selbst noch bevorzugter, wobei die Entkopplung des Schwenkmechanismus das Heben des länglichen Elements relativ zur Basis (114) mit dem Hebemechanismus umfasst.

6. Verfahren nach einem vorhergehenden Anspruch, bei dem das Transferieren des länglichen Elements aus dem ersten Modus in den zweiten Modus, und umgekehrt, durch einen Drehzapfenmechanismus bewirkt wird und/oder,
wobei das längliche Element ferner einen Rotor (102) eines Flettner-Rotors (100) umfasst.

7. Hebe- und Senkmechanismus für ein längliches Element, wobei der Mechanismus umfasst:
Ein längliches Element, wobei das längliche Element einen Stator (104) eines Flettner-Rotors (100) umfasst;
eine Basis (114); und
einen Lasttransfermechanismus zum Transferieren des länglichen Elements zwischen einem ersten Modus, in welchem Belastungen entlang eines ersten Belastungsweges zwischen dem länglichen Element und der Basis getragen werden, und einem zweiten Modus, in welchem Belastungen entlang eines zweiten Belastungsweges zwischen dem länglichen Element und der Basis getragen werden, welcher zweite Belastungsweg eine Schwenkachse (206) einschließt;
wobei der Mechanismus derartig ausgelegt ist, dass das Transferieren des länglichen Elements aus dem ersten Modus in den zweiten Modus das Trennen des länglichen Elements von der Basis und anschließen das in Eingriff bringen eines Drehzapfenmechanismus (206, 304) dazwischen, der die Schwenkachse (206) enthält.

8. Hebe- und Senkmechanismus nach Anspruch 7, wobei der Lasttransfermechanismus einen Drehzapfenmechanismus umfasst, der umfasst:
Eine Drehzapfenachse (206), die an das längliche Element angebracht ist; und eine Drehzapfenstützstrebe (300), die drehbar an die Drehzapfenachse (206) gekoppelt und verschiebbar mit der Basis (114) in Eingriff ist, vorzugsweise,
wobei die Drehzapfen-Stützstrebe (300) eine erste Drehzapfen-Stützstrebe und eine zweite Drehzapfen-Stützstrebe umfasst, wobei jede drehbar an die Drehzapfenachse (206) gekoppelt und verschiebbar mit der Basis (114) in Eingriff ist, noch bevorzugter,
wobei die Drehzapfenachse (206) eine erste Drehzapfenachse und eine zweite Drehzapfenachse umfasst, wobei die erste Drehzapfen-Stützstrebe drehbar an die/eine erste Drehzapfenachse gekoppelt ist und, wobei die zweite Drehzapfen-Stützstrebe an die/eine zweite Drehzapfenachse gekoppelt ist.

9. Hebe- und Senkmechanismus nach Anspruch 8, wobei der Drehzapfenmechanismus ferner umfasst:
Einen Lagerblock (306) der Drehzapfenstrebe; und
einen Mechanismus zum Einfügen des Lagerbocks (306) der Drehzapfenstrebe zwischen die Drehzapfenstrebe (300) und die Basis (114), um einen zweiten Belastungsweg dort hindurch zu vervollständigen, vorzugsweise,
wobei der Mechanismus zum Einfügen des Lagerbocks (306) der Drehzapfenstrebe zwischen die Drehzapfenstrebe (300) und die Basis (114), einen doppelt wirkenden Hydraulikzylinder (308) umfasst.

10. Hebe- und Senkmechanismus nach einem der Ansprüche 7 bis 9, der ferner einen oder mehrere Lagerpunkte (202) umfasst, die zwischen dem länglichen Element und der Basis (114) und entlang des ersten Belastungsweges angeordnet sind, und/oder
ferner einen Hebemechanismus umfassend, der ausgelegt ist, das längliche Element von der Basis (114) zu trennen, um Transfer des länglichen Elements zwischen dem ersten Modus und dem zweiten Modus zu erlauben, vorzugsweise, wobei der Hebemechanismus einen oder mehrere Heber (602) umfasst.

11. Hebe- und Senkmechanismus nach einem der Ansprüche 7 bis 10, der ferner einen Betätigungsmechanismus umfasst, der zwischen das längliche Element und die Basis (114) gekoppelt und ausgelegt ist, das längliche Element, wenn es sich im zweiten Modus befindet, zu heben und/oder zu senken, vorzugsweise, wobei der Betätigungsmechanismus eins oder beides einer Betätigungsramme und einem Windenmechanismus ist, vorzugsweise,
wobei der Betätigungsmechanismus über einen oder mehrere gekröpfte Anker (504) an das längliche Element gekoppelt ist, noch bevorzugter,
wobei der Betätigungsmechanismus eine Betätigungsramme umfasst, die sich in einem eingefahrenen Zustand befindet, wenn sich das längliche Element in einer gesenkten Position befindet.

12. Hebe- und Senkmechanismus nach einem der Ansprüche 7 bis 11, der ferner einen Niederhaltemechanismus umfasst, der ausgelegt ist, das längliche Element an die Basis (114) zu sichern.

13. Hebe- und Senkmechanismus nach Anspruch 12, wobei der Niederhaltemechanismus eine oder mehrere Verzurrungen, zum Beispiel Spannschlösser (204) umfasst, die zwischen das längliche Element und die Basis (114) gekoppelt sind.

14. Hebe- und Senkmechanismus nach einem der Ansprüche 7 bis 13, wobei die Basis (114) am Deck gesichert oder integral damit geformt ist.

15. Hebe- und Senkmechanismus nach einem der Ansprüche 7 bis 14, wobei das längliche Element ferner einen Rotor (102) eines Flettner-Rotors (100) umfasst.

## Revendications

1. Un procédé d'abaissement d'un élément allongé, depuis une position relevée, pour l'amener à une position abaissée, et cet élément allongé se compose d'un stator (104) implanté sur un rotor de Flettner (100), et ce procédé se compose des étapes suivantes :
le transfert de l'élément allongé depuis :
un premier mode, durant lequel des charges sont supportées et acheminées le long d'un premier parcours de transport de charge, entre l'élément allongé et un socle (114) et à destination :
d'un deuxième mode, durant lequel des charges sont supportées et acheminées le long d'un deuxième parcours de transport de charge, entre l'élément allongé et le socle (114) et ce deuxième parcours de transport de charge comporte un axe pivot (206), par le biais :
d'une séparation de l'élément allongé et du socle (114) et, par la suite, en assurant un engrènement avec le mécanisme pivotant (206, 304) inséré dans cet espace qui contient ledit axe pivot (206), et,
alors que l'élément allongé est dans le deuxième mode, l'abaissement de l'élément allongé par rapport à l'axe.

2. Le procédé que décrit la revendication 1, si ce n'est que la séparation de l'élément allongé et du socle (114) comporte le relevage de cet élément allongé par rapport au socle (114) et, de préférence,
ce relevage se réalise à l'aide d'un mécanisme de levage qui y effectue un parcours temporaire d'acheminement de charge entre l'élément allongé et le socle (114) et, de préférence,
ce procédé comporte également une rétraction au moins partielle du mécanisme de levage, un retrait du parcours temporaire de transport de charge et un abaissement de l'élément allongé qui revient ainsi au contact du socle (114) afin d'assurer la mise en prise du mécanisme pivotant et la formation du deuxième parcours de transport de charge.

3. Le procédé que décrit l'une ou l'autre des revendications précédentes, si ce n'est que la mise en prise du mécanisme pivotant comporte l'insertion d'un composant pour créer le deuxième parcours de transport de charge.

4. Un procédé de levage d'un élément allongé, depuis une position abaissée, pour l'amener à une position relevée, et cet élément allongé se compose d'un stator (104) implanté sur un rotor de Flettner (100), et ce procédé se compose des étapes suivantes :
lorsque l'élément allongé est dans un deuxième mode, durant lequel des charges sont supportées et acheminées le long d'un deuxième parcours de transport de charge, entre l'élément allongé et un socle (114) et ce deuxième parcours de transport de charge comporte un axe pivot qui relève l'élément allongé par rapport à l'axe pivot et
après ce levage, le membre allongé passe du deuxième mode au premier mode, durant lequel des charges sont supportées et acheminées le long d'un premier parcours de transport de charge, entre l'élément allongé et un socle (114), en y mettant hors prise un mécanisme pivotant (206, 304) qui contient ledit axe pivot (206) et, par la suite, en ramenant l'élément allongé au contact du socle.

5. Le procédé que décrit la revendication 4, si ce n'est que la mise hors prise du mécanisme pivotant comporte le retrait d'un composant pour interrompre le deuxième parcours de transport de charge et, de préférence,
si ce n'est que l'intervention ayant pour but de ramener l'élément allongé au contact du socle (114) contient l'abaissement de l'élément allongé par rapport au socle et, de préférence,
si ce n'est que cet abaissement s'effectue à l'aide d'un mécanisme de levage qui, premièrement, relève l'élément allongé afin d'y créer un parcours temporaire d'acheminement de charge entre l'élément allongé et le socle (114), avant de l'abaisser et, de préférence, si ce n'est que la mise hors prise du mécanisme pivotant contient le levage de l'élément allongé par rapport au socle (114), en faisant appel au mécanisme de levage.

6. Le procédé que décrit l'une ou l'autre des revendications précédentes, durant lequel le transfert de l'élément allongé du premier mode au deuxième mode et vice-versa s'effectue par l'entremise d'un mécanisme à tourillon et (ou)
si ce n'est que l'élément allongé comporte, en outre, un rotor (102) d'un rotor de Flettner (100).

7. Un mécanisme de levage et d'abaissement d'élément allongé, et ce mécanisme se compose :
d'un élément allongé, et cet élément allongé se compose d'un stator (104) d'un rotor de Flettner (100)
d'un socle (114) et
d'un mécanisme de transfert de charge qui assure le transfert de l'élément allongé entre un premier mode, durant lequel des charges sont acheminées le long d'un premier parcours de transport de charge, et un deuxième mode, durant lequel des charges sont acheminées le long d'un deuxième parcours de transport de charge, entre l'élément allongé et le socle, et ce deuxième parcours de transport de charge comporte un axe pivot (206)
si ce n'est que ce mécanisme est configuré de telle sorte que le transfert de l'élément allongé, du premier mode au deuxième mode, comporte la séparation de l'élément allongé et du socle, puis, par la suite, la mise en prise d'un mécanisme pivotant (206, 304) contenant ledit axe pivot (206).

8. Le mécanisme de levage et d'abaissement d'élément allongé que décrit la revendication 7, si ce n'est que le mécanisme de transfert de charge comporte un mécanisme à tourillon qui se compose :
d'un essieu à tourillon (206) rattaché à l'élément allongé et
d'une jambe de force de soutien de tourillon (300) qui se raccorde, en tournant, à l'essieu à tourillon (206) et qui vient se mettre en prise, en coulissant, avec le socle (114) et, de préférence,
si ce n'est que la jambe de force de soutien de tourillon (300) comporte une première jambe de force de soutien de tourillon et une deuxième jambe de force de soutien de tourillon qui se raccordent toutes deux, en tournant, à l'essieu à tourillon (206) et qui se mettent en prise, en coulissant, avec le socle (114) et, en outre, de préférence
si ce n'est que l'essieu à tourillon (206) comporte un premier essieu à tourillon et un deuxième essieu à tourillon, et i ce n'est que la première jambe de force de soutien de tourillon se raccorde, en tournant, au premier essieu à tourillon et si c n'est que la deuxième jambe de force de soutien de tourillon se raccorde, en tournant, au deuxième essieu à tourillon.

9. Le mécanisme de levage et d'abaissement que décrit la revendication 8, si ce n'est que le mécanisme à tourillon se compose, en outre, des éléments suivants :
un bloc palier pour jambe de force de soutien de tourillon (306) et
un mécanisme d'insertion du bloc palier pour jambe de force de soutien de tourillon (306) entre la jambe de force de soutien de tourillon (300) et le socle (114) pour en compléter, de préférence, le deuxième parcours d'acheminement de charge.
et ce mécanisme d'insertion du bloc palier pour jambe de force de soutien de tourillon (306) entre la jambe de force de soutien de tourillon (300) et le socle (114) se compose d'un vérin hydraulique double effet (308).

10. Le mécanisme de levage et d'abaissement que décrit l'une ou l'autre des revendications 7 à 9, si ce n'est qu'au moins un point de type palier (202) est implanté entre l'élément allongé et le socle (114) et le long du premier parcours de transport de charge et (ou)
si ce n'est qu'il y a, en outre, un mécanisme de levage configuré pour séparer l'élément allongé et le socle (114) afin de permettre le transfert de l'élément allongé du premier mode au deuxième mode, et vice-versa, de préférence, et si ce n'est que ce mécanisme de levage comporte un ou plusieurs vérins (602).

11. Le mécanisme de levage et d'abaissement que décrit l'une ou l'autre des revendications 7 à 10, si ce n'est qu'il y a, en outre, un mécanisme de commande raccordé entre le membre allongé et le socle (114) et configuré pour lever et (ou) abaisser l'élément allongé, lorsqu'il est dans le deuxième mode, de préférence, si ce n'est que ce mécanisme de commande est au moins l'un des deux éléments suivants : un piston de commande et un mécanisme de treuillage, de préférence,
si ce n'est que ce mécanisme de commande est raccordé à l'élément allongé par le biais d'une ou plusieurs biellettes (504), de préférence,
si ce n'est que ce mécanisme de commande comporte un piston de commande qui est en position rentrée lorsque l'élément allongé est en position abaissée.

12. Le mécanisme de levage et d'abaissement que décrit l'une ou l'autre des revendications 7 à 11, si ce n'est qu'il y a, en outre, un mécanisme de maintien configuré pour immobiliser l'élément allongé contre le socle (114).

13. Le mécanisme de levage et d'abaissement que décrit la revendication 12, si ce n'est que ce mécanisme de maintien comporte une ou plusieurs attaches comme, par exemple, des tendeurs (204) qui viennent se raccorder entre l'élément allongé et le socle (114).

14. Le mécanisme de levage et d'abaissement que décrit l'une ou l'autre des revendications 7 à 13, si ce n'est que le socle (114) vient se fixer sur une platine ou fait partie intégrante d'une platine.

15. Le mécanisme de levage et d'abaissement que décrit l'une ou l'autre des revendications 7 à 14, si ce n'est que l'élément allongé comporte, en outre, un rotor (102) d'un rotor de Flettner (100).
